# EUROPÄISCHE PATENTSCHRIFT

(11) **EP 1 035 902 B1**
(45) Veröffentlichungstag und Bekanntmachung des Hinweises auf die Patenterteilung: **05.03.2003**
(21) Anmeldenummer: 98962378.0
(22) Anmeldetag: 20.11.1998
(51) Int. Cl.: B01D 39/16, B01D 39/18

(54) **FILTERELEMENT**
FILTER ELEMENT
ELEMENT FILTRANT

(30) Priorität: 25.11.1997 DE 19752143
(43) Veröffentlichungstag der Anmeldung: 20.09.2000
(73) Patentinhaber: FILTERWERK MANN & HUMMEL GmbH, 71631 Ludwigsburg (DE)
(72) Erfinder: KLEIN, Gunnar-Marcel, D-73235 Weilheim (DE); MOSER, Nikolaus, D-71254 Ditzingen (DE)
(74) Vertreter: Voth, Gerhard, Dipl.-Ing.
(86) Internationale Anmeldenummer: EP9807487
(87) Internationale Veröffentlichungsnummer: WO99026710

(56) Entgegenhaltungen:
- EP-A- 0 060 677
- EP-A- 0 338 479
- US-A- 4 033 881
- US-A- 4 976 858

## Beschreibung

### Stand der Technik

Die Erfindung betrifft ein Filterelement, insbesondere für die Filtrierung von Flüssigkeiten, nach der Gattung des Hauptanspruchs.

Es ist bekannt, dass bei bekannten Filterelementen unterschiedliches Filtermaterial zur Erzeugung eines für die auszufilternden Partikel und die durchströmende Flüssigkeit optimalen Filterverhaltens miteinander kombiniert wird. Für sich gesehen ist beispielsweise aus der DE 44 43 158 A1 bekannt, ein Meltblown als Filtermedium in einem Gasstrom zusammen mit einem ausschließlich zur Stabilisierung dienenden Trägermaterial einzusetzen.

Weiterhin ist aus der WO 96/34673 bekannt, bei einem holzylindrischen Filterelement mehrere Filterlagen aus einem Meltblown auf einer Trägerlage anzuordnen. Die Lagen bilden dann zusammen ein auswechselbares Filterelement, das in eine Filteranordnung einsetzbar ist.

Aus der US-PS 5,496,627 und aus der WO 95/17946 ist die Hintereinanderschaltung von Vlies-Filtermedien aus synthetischen Fasern mit abgestufter Filterfeinheit bekannt, wobei hier die Filterfeinheit der Filterlagen in Strömungsrichtung zunimmt.

Außerdem ist aus der US-PS 5,427,597 und aus der WO 96/34673 bekannt, dass mehrere Filterlagen oder nur eine Filterlage aus einem nach dem Meltblown-Verfahren hergestellten Vlies auf einem, im wesentlichen zur Stabilisierung dienenden Trägerlage angeordnet werden. Die Filterwirkung der Trägerlage ist dabei gegenüber den anderen Lagen zu vernachlässigen.

Die Verarbeitung von synthetischen Filtervliesen, insbesondere Meltblown-Vliesen, zu Filtern erfordert die Verwendung von Stützmaterialien. Hierzu werden z.B. auch Metalldrahtgewebe oder ach cellulosebasierte Filterpapiere verwendet. Bei einer Verwendung von cellulosebasierten Stützlagen werden bisher ausschließlich Filterlagen verwendet, die einen wesentlich geringeren Abscheidegrad aufweisen als die synthetische Filterlage. Die Stützlage hat hierbei keinen Einfluss auf die Filtrationseigenschaften der Gesamtanordnung, benötigt aber einen wesentlichen Raumbedarf. Insgesamt wird bei diesem an sich bekannten Konzept nur ein bestimmter Teil (z.B. 30%-50%) des Volumens der Gesamtanordnung für eine Filtrierung ausgenutzt.

### Aufgabenstellung

Der Erfindung liegt die Aufgabe zugrunde, ein Filterelement der eingangs genannten Art so auszubilden, dass die Filterwirkung durch einen Mehrlagenaufbau insgesamt verbessert und über einen langen Zeitraum aufrecht erhalten werden kann.

### Vorteile der Erfindung

Das erfindungsgemäße Filterelement ist in vorteilhafter Weise geeignet, mit den Merkmalen des Hauptanspruchs die gestellte Aufgabe zu lösen. Beim erfindungsgemäßen Filterelemente sind in Durchströmungsrichtung mehrere Lagen eines Filtermediums aneinandergefügt, wobei die Filterfeinheit in Durchströmungsrichtung zunimmt, bei abnehmender Schmutzkapazität der Einzellagen zur Verbesserung der gesamten Kapazität bei gegebener Filterfeinheit oder zur Erhöhung der Filterfeinheit bei gegebener Kapazität.

In vorteilhafter Weise werden beim erfindungsgemäßen Filterelement in der abströmseitig angeordneten Celluloselage die Funktionen Plissierfähigkeit, Abstützung der synthetischen Lagen und Feinstfiltration integriert. Im Unterschied zu den bekannten Anordnungen werden nach der Erfindung das gesamte Filtervolumen für eine Partikelabscheidung in einer Anordnung mit in Strömungsrichtung zunehmender Filterfeinheit genutzt, wobei insbesondere die cellulosebasierte Filterlage und nicht eine synthetische Filterlage (z.B.Melt-Blown) als Feinstfilterlage ausgebildet ist.

Mit der Erfindung ist weiterhin eine Verbesserung der Verarbeitbarkeit und eine Erhöhung der mechanischen Stabilität zur Herstellung selbsttragender sterngefalteter Filterelemente, insbesondere zur wirtschaftlichen Herstellung auf rotierenden Prägefaltmaschinen, erreicht. Die Vorteile der erfindungsgemäßen Anordnung bezüglich der Filtrationseigenschaften, der Raumausnutzung und der Verarbeitbarkeit sind auch dann gegeben, wenn Cellulosefasern gegebenenfalls auch größere Durchmesser aufweisen als synthetische Fasern.

Die cellulosehaltigen Filterpapiere können auch einen Fremdstoffanteil von bis zu 50% aufweisen, wobei die Fremdstoffe Glas- oder Polyesterfasern sein können.

Bei der Erfindung ist in vorteilhafter Weise das anströmseitige Filtermedium als ein Meltblown, bzw. aus synthetischen Fasern und das abströmseitige Filtermedium als ein plissierbares Filterpapier ausgeführt.

Die erfindungsgemäße Verwendung von sog. Meltblown-Vliesen als eine Lage eines Filtermediums ist äußerst vorteilhaft, da diese eine sehr hohe Speicherkapazität für die ausgefilterten Partikel bei einem geringen Durchströmungswiderstand für das zu filternde Medium aufweist. Dieser Vorteil wird durch die geringen Faserdurchmesser (ca. < 2µm) und die große Porösität des Meltblown-Vliesmaterials erreicht. Die Filterwirkung, insbesondere der Abscheidegrad, steigt dabei mit der Aufnahme von ausgefilterten Partikeln während der Gebrauchsdauer zunächst an. Die Filterfeinheit der anströmseitigen Lage ist hierbei so gewählt, dass durch diese Feinlage eine hinreichend lange Standzeit des Filterelements erreichbar ist.

Gemäß der Erfindung sind folgende Filtermedien im Einsatz: anströmseitig ein Meltblown-Vlies mit ca. 15 bis 150 g/m² Flächengewicht und abströmseitig ein cellulosehaltiges Filterpapier mit ca. 50 bis 200 g/m² Flächengewicht. Als Ausgangsmateriai für das Meltblown-Vlies kommt beispielsweise PP (Polypropylen), insbesondere für nichtagressive Flüssigkeiten, oder PES (Polyethersulfon) in Frage, das auch bei der Filtrierung von Kraftstoff oder Hydraulikölen und Schmierölen Verwendung finden kann.

Die guten Abscheidegrade der Feinstfilterlage werden hierbei durch eine Verdichtung der Fasern während des Herstellungsprozesses bzw. durch eine mechanische Verdichtung (Kalandrierung) der Celluloselage im Anschluss an den Herstellungsprozess erreicht. Besonders vorteilhaft ist hierbei, dass verdichtete Celluloselagen auch bei sehr geringer Dicke eine ausreichende mechanische Stabilität und damit eine ausreichende Stützfunktion der synthetischen Filterlage, sowie eine ausreichende mechanische Festigkeit der gesamten Filteranordnung aufweisen.

Eine vorteilhafte Weiterbildung des erfindungsgemäßen Filterelements ergibt sich, wenn zwischen dem anströmseitigen Filtermedium und dem abströmseitigen Filtermedium eine dritte Lage eines kalandrierten Meltblowns angeordnet ist.

Eine vorteilhafte Weiterverarbeitung der erfindungsgemäßen Filteranlagen mit der beschriebenen Gradientenstruktur hinsichtlich der Speicherfähigkeit und des Abscheidegrades erfolgt bevorzugt dadurch, dass die aneinandergefügten Lagen der Filtermedien zur Bildung des Filterelements sterngefaltet sind. Insbesondere können die Lagen der Filtermedien vor oder während der Faltung ultraschallverschweißt oder durch Flächenpressung während des Faltvorgangs, beispielsweise an einer Prägefaltmaschine, aneinandergefügt werden. Die Lagen können auch mit einem Klebstoff verklebt werden, wobei auch ein pulverförmiger Klebstoff oder ein Hotmelt-Imprägniermittel Verwendung finden kann.

Als Anwendungsgebiet für das erfindungsgemäße Filterelement kommen beispielsweise Ölfiltersystem, insbesondere für ein Kraftfahrzeug, in Frage. Die oben beschriebenen Mehrlagen-Filterelemente sind den bekannten einlagigen Filtermedien hinsichtlich Durchflusswiderstand und Kapazität deutlich überlegen. Jeweils angepasste Kombinationen von wenigen Basiselementen für die Filtermedien erlauben hier eine große Variationsbreite der Filtereigenschaften, so dass hier eine erhöhte Standzeit bei bestehendem Bauvolumen, einer gesteigerten Filterfeinheit ohne Standzeiteinbuße und ein geringerer Durchflusswiderstand mit relativ einfachen Mitteln erreicht werden kann.

Weitere Vorteilhafte Ausführungsformen sind in den Unteransprüchen angegeben.

### Zeichnung

Ausführungsbeispiele von erfindungsgemäßen Filterelementen werden anhand der Zeichnung erläutert. Es zeigen:
Figur 1 einen Schnitt durch ein Filterelement mit einer anströmseitigen
Lage aus Meltblown-Vlies und einer abströmseitigen Lage aus cellulosehaltigem Filterpapier;
Figur 2 einen Schnitt durch ein Filterelement nach Figur 1 mit einer Zwischenlage;
Figur 3 einen Schnitt durch ein Filterelement mit einer anströmseitigen und einer abströmseitigen Lage aus cellulosehaltigem Filterpapier;
Figur 4 eine Prinzipskizze eines Beispiels einer Sternfaltung und
Figur 5 ein Diagramm für den von der Partikelbelastung des Filterelements abhängigen Verlauf des Abscheidegrades.

### Beschreibung der Ausführungsbeispiele

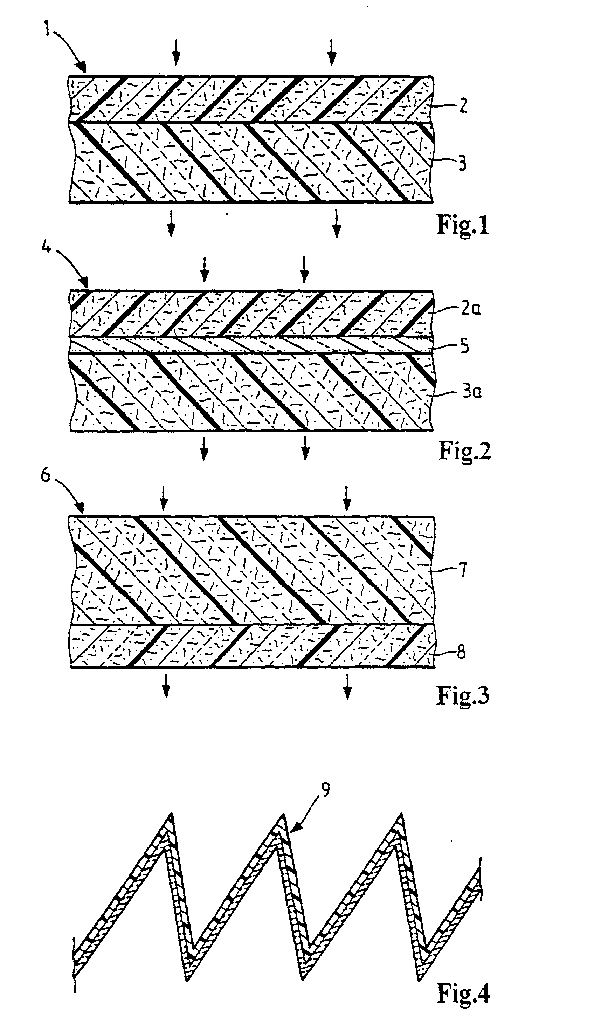

In Figur 1 ist ein Schnitt durch ein Filterelement 1 mit einer anströmseitigen Lage 2 aus Meltblown-Vlies und einer abströmseitigen Lage 3 aus cellulosehaltigem Filterpapier gezeigt. Das Meltblown-Vlies der Lage 2 kann beispielsweise mit einem Fasermaterial von ca. 15 bis 150 g/m² Flächengewicht und abströmseitig die Lage 3 mit cellulosehaltigem Filterpapier mit ca. 50 bis 200 g/m² Flächengewicht hergestellt werden.

Als Ausgangsmaterial für das Meltblown-Vlies kommt beispielsweise PP (Polypropylen), insbesondere für nichtagressive Flüssigkeiten, oder PES (Polyethersulfon) in Frage.

Beim einem Ausführungsbeispiel eines Filterelements 4 nach Figur 2 ist zwischen der anströmseitigen Lage 2 und der abströmseitigen Lage 3 eine dritte Lage 5 eines kalandrierten Meltblowns angeordnet.

Ein weiteres bevorzugtes Ausführungsbeispiel eines Filterelements 6 ist in Figur 3 dargestellt. Hierbei besteht das anströmseitige Filtermedium aus einer Lage 7 eines cellulosehaltigen Filterpapiers und eine Lage 8 des abströmseitigen Filtermediums ebenfalls aus einem cellulosehaltigen Filterpapier. Bei diesem Ausführungsbeispiel wird somit durch eine entsprechend angepasste Beimischung von Cellulosefasern in ein Papierfiltermedium jeweils eine entsprechende Filterwirkung der jeweiligen Lage, wie weiter unten beschrieben, erreicht.

Zur Weiterverarbeitung der anhand der Figuren 1 bis 3 beschriebenen Filterlagen der Filterelemente 1, 4 oder 6 werden die aneinandergefügten Lagen der Filtermedien gemäß der Skizze nach Figur 4 zur Bildung eines Filterelements 9 sterngefaltet. Hierbei können die Lagen der Filtermedien vor oder während der Faltung ultraschallverschweißt, durch Klebung oder durch Flächenpressung während des Faltvorgangs, beispielsweise an einer Prägefaltmaschine, aneinandergefügt werden.

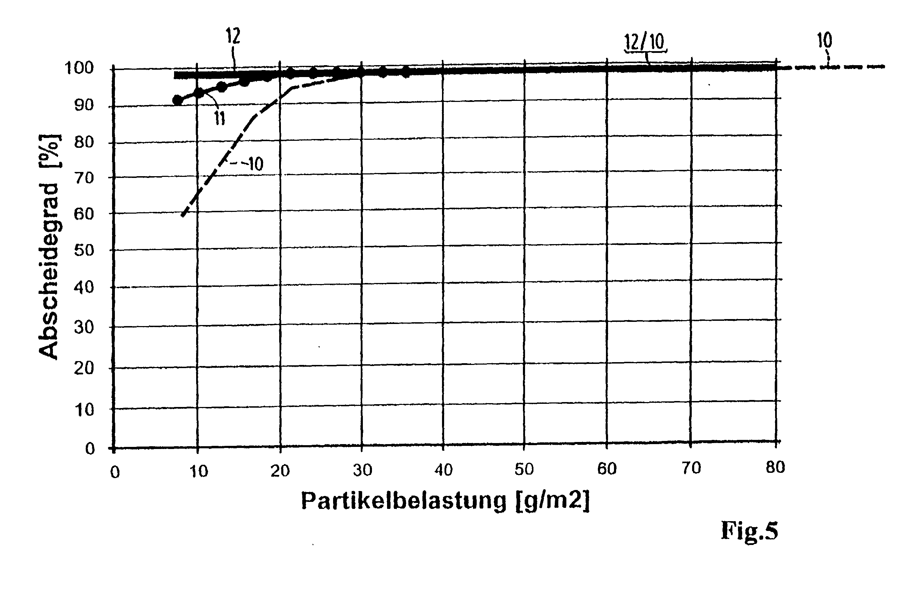

Zur Verdeutlichung der unterschiedlichen Filterwirkungen sind nach einem Diagramm gemäß Figur 5 Kurven für den von der Partikelbelastung (g/m²)des Filterelements abhängigen Verlauf des Abscheidegrades (%) gezeigt. Die Kurve zeigt hier beispielsweise einen Verlauf 10 für die anströmseitige Lage 2 (vgl. Figur 1) aus einem Meltblown-Vlies, die Kurve 11 einen Verlauf für die abströmseitige Lage 3 (vgl. Figur 1) aus einem cellulosehaltigem Papiermaterial. Die Kurve 12 zeigt die Kombinationswirkung aus den beiden Lagen 2 und 3 nach Figur 1.

Es ist aus dem Diagramm nach der Figur 5 erkennbar, dass bei Beginn der Partikelbelastung anströmseitig eine Lage 2 eines Filtermediums mit hoher Speicherkapazität und geringem Abscheidegrad für die auszufiltemden Partikel hergestellt ist und abströmseitig sich eine Lage 3 eines Filtermediums mit geringer Speicherkapazität und hohem Abscheidegrad für die auszufilternden Partikel befindet.

## Patentansprüche

1. Filterelement, bei dem in Durchströmungsrichtung mehrere Lagen (2,3,5;7,8) eines Filtermediums aneinandergefügt sind, bei denen ein in Durchströmungsrichtung zunehmender Abscheidegrad für die auszufiltemden Partikel bei in gleicher Durchströmungsrichtung abnehmender Speicherkapazität vorhanden ist, wobei die anströmseitige Filterlage (2) aus synthetischen Fasern hergestellt ist und die abströmseitige Filterlage (3;8) aus einem überwiegend cellulosehaltigen Filterpapier besteht, **dadurch gekennzeichnet, dass** die anströmseitige Lage (2) aus einem Meltblown-Vlies mit ca. 15 bis 150 g/m² Flächengewicht und die reinseitige Lage (3) aus einem überwiegend cellulosehaltigem, gegebenenfalls kalandrierten oder verdichteten, Filterpapier mit ca. 50 bis 200 g/m² Flächengewicht besteht.

2. Filterelement, bei dem drei Lagen (2,5,3) eines Filtermediums aneinandergefügt sind nach Anspruch 1, **dadurch gekennzeichnet, dass**
- die abströmseitige Lage (3) aus einem überwiegend cellulosehaltigen Filterpapier besteht und vorwiegend zur Stabilisierung des Filterelements heranziehbar ist und dass
- alle anderen Lagen (2,5) Vliesmaterialien aus synthetischen Fasern sind, wobei diese Filterlagen einen in Durchströmungsrichtung zunehmenden Abscheidegrad für die auszufilternden Partikel bei gleichzeitig abnehmender Speicherkapazität aufweisen.

3. Filterelement nach Anspruch 2, **dadurch gekennzeichnet, dass**
- zwischen dem anströmseitigen Filtermedium und dem abströmseitigen Filtermedium als dritte Lage (5) ein gegebenenfalls kalandriertes Meltblown-Vlies mit einem Flächengewicht von 15 bis 150 g/m² angeordnet ist.

4. Filterelement nach einem der vorhergehenden Ansprüche, **dadurch gekennzeichnet, dass**
- die aneinandergefügten Filtermedien zur Bildung des Filterelements (9) sterngefaltet sind.

5. Filterelement nach einem der vorhergehenden Ansprüche, **dadurch gekennzeichnet, dass**
- die Lagen (2,3,5;7,8) der Filtermedien ultraschallverschweißt sind.

6. Filterelement nach einem der Ansprüche 1 bis 4, **dadurch gekennzeichnet, dass**
- die Lagen (2,3,5;7,8) der Filtermedien durch Flächenpressung während eines Faltvorgangs aneinandergefügt sind.

7. Filterelement nach einem der Ansprüche 1 bis 4, **dadurch gekennzeichnet, dass**
- die Lagen (2,3,5;7,8) der Filtermedien durch Klebung mit pulverförmigem Kleber oder mit einem Hotmelt-lmprägniermittel oder durch Flächenpressung während eines Faltvorgangs aneinandergefügt sind.

8. Filterelement nach einem der vorhergehenden Ansprüche, **dadurch gekennzeichnet, dass**
- eine oder mehrere der cellulosehaltigen Filterlagen einen Anteil von bis zu 50% aus synthetischen Fasern, insbesondere Polyester oder Glasfasern, aufweist.

9. Filterelement nach einem der vorhergehenden Ansprüche, **dadurch gekennzeichnet, dass**
- das Filterelement als Haupt- oder Nebenstromfilter in einem Öl- oder Kraftstofffiltersystem, insbesondere für ein Kraftfahrzeug, angewendet wird.

## Claims

1. Filter element wherein several layers (2,3,5,7,8) of a filter medium are assembled in the flow direction and increasing separation rate for the particles to be filtered exist in said layers in the flow direction with decreasing storage capacity in the same flow direction, whereby the filter layer (2) is realised on the side of the incoming flow out of synthetic fibers and the filter layer (3,8) is composed on the side of the outgoing flow predominantly of filter paper containing cellulose, **characterized in that** the layer (2) is composed on the side of the incoming flow of a meltblown non woven fabrics with a grammage of about 15 to 150 gr/cm³ and the layer (3) situated on the side of the non filtered product is composed of eventually calandered and compressed filter paper with a grammage of about 50 to 200 gr/cm² and containing predominantly cellulose.

2. Filter element according to claim 1 wherein three layers (2,5,3) of a filter medium are assembled, **characterized in that**:
- the layer (3) on the side of the outgoing flow is composed of a filter paper containing predominantly cellulose and can be used predominantly for stabilising the filter element and that:
- all the other layers (2,3) are non woven materials made of synthetic fibres, these filter layers having in flow direction an increasing separation rate for particles to be filtered with a decreasing storage capacity.

3. Filter element according to claim 2, **characterized in that** an eventually calandered non woven meltblown material (2) as a third layer (5) with a grammage to 15 to 150 gr/cm2 is arranged between the filter medium on the side of the incoming flow and the filter medium on the side of the outgoing flow.

4. Filter element according to one of the preceding claims, **characterized in that** the assembled filter media are folded in form of a star for realising the filter element (9).

5. Filter element according to one of the preceding claims, **characterized in that** the layers of the filter medium are ultrasound welded.

6. Filter element according to one of the claims 1 to 4, **characterized in that** the layers of the filter element (2,3,5,7,8) are assembled by means of surface pressing during the folding procedure.

7. Filter element according to one of the claims 1 to 4, **characterized in that** the layers (2,3,5,7,8) of the filter media are assembled by means of sticking with a sticker in form of powder or with the hotmelt impregnation agent or by means of surface pressing during the folding procedure.

8. Filter element according to one of the preceding claims, **characterized in that** one or more of the filter elements containing cellulose have a content going until 50% of synthetic fibres particularly polyester of glass fibres.

9. Filter element according to one of the preceding claims, **characterized in that** the filter element is used as a filter for the main or auxiliary flow in an oil or fuel filter system, particularly for a vehicle.

## Revendications

1. Elément filtrant dans lequel plusieurs couches (2,3,5,7,8) d'un moyen filtrant sont ajoutées à la suite en direction de circulation du flux , dans lesquelles couches il existe un degré croissant de séparation en direction du flux pour les particules à filtrer avec une capacité de stockage diminuant dans la même direction de flux ; la couche de filtre (2) située du coté du flux arrivant, étant réalisée en fibres synthétiques et la couche de filtre (3, 8) située du coté du flux sortant étant réalisée en grande partie d'un papier de filtre contenant de la cellulose, **caractérisé en ce que** la couche (2) située du coté du flux arrivant est réalisée en un non tissé meltblown d'environ 15 à 150 g/m2 de grammage et **en ce que** la couche située du coté du produit non filtré est réalisée en grande partie dans un papier de filtre contenant de la cellulose ou étant éventuellement calandré ou condensé avec environ 50 à 200 g/m2 de grammage.

2. Elément filtrant dans lequel trois couches (2, 5, 3) d'un moyen filtrant sont ajoutées à la suite, **caractérisé en ce que** :
- la couche située du coté du flux sortant (3) est constituée d'un papier filtrant contenant en grande partie de la cellulose et laquelle couche peut être utilisée principalement pour stabiliser l'élément filtrant, et **en ce que**
- toutes les autres couches (2, 5) sont en matière de non tissé , en fibres synthétiques ; ces couches de filtre présentant un degré de séparation croissant en direction du flux pour les particules à enlever par filtrage avec une capacité de stockage diminuant.

3. Elément filtrant selon la revendication 2, **caractérisé en ce que** :
- en tant que troisième couche (5), on a disposé un non tissé meltblown éventuellement calandré avec un grammage compris entre 15 et 150 g/m2 entre le moyen filtrant situé du coté du flux arrivant et le moyen filtrant situé du coté du flux sortant.

4. Elément filtrant selon une des revendications précédentes, **caractérisé en ce que**,
- les moyens filtrants ajoutés à la suite sont pliés sous la forme d'une étoile pour former l'élément filtrant (9).

5. Elément filtrant selon une des revendications précédentes, **caractérisé en ce que**,
- les couches (2,3,5,7,8) des moyens filtrants, ont été soudées par ultrasons.

6. Elément filtrant selon une des revendications 1 à 4, **caractérisé en ce que** :
- les couches (2,3,5,8) des moyens filtrants sont ajoutées à la suite par une pression des surfaces , pendant une phase de pliage .

7. Elément filtrant selon une des revendications 1 à 4, **caractérisé en ce que** :
- les couches (2,3,5,8) des moyens filtrants ont été ajoutées à la suite par collage avec une colle en forme de poudre ou avec un imprégnant hotmelt ou par une pression des surfaces pendant une phase de pliage .

8. Elément filtrant selon une des revendications précédentes, **caractérisé en ce que** :
- une ou plusieurs couches de filtre contenant de la cellulose présentent un taux de fibres synthétiques pouvant aller jusqu'à 50% , notamment du polyester ou des fibres de verre.

9. Elément filtrant selon une des revendications précédentes, **caractérisé en ce que** :
- l'élément filtrant est utilisé comme filtre de flux principal ou secondaire dans un système de filtrage d'huile ou de carburant, notamment pour des véhicules automobiles.
